# EUROPÄISCHE PATENTSCHRIFT

(11) **EP 0 649 930 B1**
(45) Veröffentlichungstag und Bekanntmachung des Hinweises auf die Patenterteilung: **10.03.1999**
(21) Anmeldenummer: 94113949.5
(22) Anmeldetag: 06.09.1994
(51) Int. Cl.: D06F 39/00, D06F 58/28

(54) **Verfahren zum Bestimmen der Wäschemenge in einer Wäschebehandlungsmaschine**
Method for determining the laundry quantity in a laundry treatment machine
Procédé pour déterminer la quantité de linge dans une machine de traitement de linge

(30) Priorität: 25.10.1993 DE 4336350
(43) Veröffentlichungstag der Anmeldung: 26.04.1995
(73) Patentinhaber: BSH Bosch und Siemens Hausgeräte GmbH, 81669 München (DE)
(72) Erfinder: Wöbkemeier, Martina, Dr.Ing., D-10789 Berlin (DE); Böldt, Frank, Dipl.-Ing., D-10409 Berlin (DE); Blauert, Peter, Dipl.-Ing., D-13595 Berlin (DE); Pilgram, Paul Theo, Dr., D-81735 München (DE); Rehfuess, Ulrich, Dipl.-Ing., D-81475 München (DE)

(56) Entgegenhaltungen:
- EP-A- 0 143 685
- EP-A- 0 345 120
- EP-A- 0 396 058
- EP-A- 0 410 827

## Beschreibung

Die Erfindung geht aus von einem Verfahren zum Bestimmen der Wäschemenge in einer wenigstens annähernd horizontal gelagerten und durch einen Universalmotor mit Wasch- bzw. Trockendrehzahl antreibbaren Wäschetrommel anhand von Beobachtungen von Parametern des Betriebs in einer Wäschebehandlungsmaschine.

Ein derartiges Verfahren ist aus EP 0 143 685 A1 bekannt. Dazu werden das Massenträgheitsmoment der trockenen oder entwässerten Wäsche aufgrund eines gemessenen Beschleunigungswertes der Trommel sowie eines dieser Beschleunigung entsprechenden Meßwertes des Motordrehmoments des Trommelantriebs während einer Schleuderanlaufphase der Trommel ermittelt und miteinander in Beziehung gesetzt.

Ferner sind ähnliche Verfahren aus DE 30 30 491 A1 und DE 33 29 345 A1 bekannt. Darin wird zur Bestimmung der Wäschemenge bzw. der von der Wäschemenge abhängigen, zum Waschen gebrauchten Wassermenge die Zulaufzeit zwischen zwei bestimmten Niveaumarken im Laugenbehälter gemessen und daraus auf die erforderliche Endmenge des Wassers geschlossen. Diese Methode ist sehr ungenau, weil sowohl der vor dem Magnetventil herrschende Wasserdruck, wie auch der im Magnetventil befindliche Mengenregler und der oder die Wasserstandgeber jeweils mit Toleranzen behaftet sind, die sich im ungünstigsten Fall sogar addieren können. Außerdem ist diese Art der Mengenbestimmung nur einmal im gesamten Prozeß der Wäschebehandlung möglich, nämlich während des erstmaligen Wasserzulaufes und der damit erfolgten Benetzung der Wäsche.

Zur Beseitigung der Ungenauigkeiten ist bereits vorgeschlagen worden, die zulaufende Wassermenge mittels einer Wasseruhr (DE-A-29 21 911) oder mittels des Abzählens der während der Benetzungsphase der Wäsche nötigen Nachtankvorgänge (DE 34 46 288 A1) zu bestimmen. Abgesehen von dem erhöhten Aufwand für die Realisierung einer genauen Bestimmung der Wasser- bzw. Wäschemenge ist auch diese Bestimmung nur einmal während des Behandlungsprogrammes möglich.

Zur Beseitigung der Ungenauigkeiten ist bereits vorgeschlagen worden, die zulaufende Wassermenge mittels einer Wasseruhr (DE-A-29 21 911) oder mittels des Abzählens der während der Benetzungsphase der Wäsche nötigen Nachtankvorgänge (DE-A-34 46 288) zu bestimmen. Abgesehen von dem erhöhten Aufwand für die Realisierung einer genauen Bestimmung der Wasser- bzw. Wäschemenge ist auch diese Bestimmung nur einmal während des Behandlungsprogrammes möglich.

Da die differenzierte Mengenbestimmung der Wäsche für die Auswahl und Gestaltung des nachfolgend ablaufenden Behandlungsprogrammes von großer Bedeutung sein kann, ist man an einer möglichst genauen Bestimmung der Wäschemenge interessiert. Der Erfindung liegt daher die Aufgabe zugrunde, ein Verfahren der eingangs genannten Art in punkto Genauigkeit zu verbessern und dazu möglichst keine baulichen Mehraufwendungen vorzunehmen.

Erfindungsgemäß wird diese Aufgabe dadurch gelöst, daß während der Trommelanlauf-Phase zum Betrieb der Trommel mit einer geregelten Behandlungsdrehzahl, bei der die Wäsche nicht durch Zentrifugalkraft am Trommelmantel gehalten wird, das Antriebsmoment am Trommelantriebsmotor bestimmt wird. Das Trommelantriebsmoment ist ein unmittelbares Abbild des durch die beladene Wäschetrommel erzeugten Lastmomentes, das unmittelbar nach dem Anschalten des Trommelantriebsmotors durch eine kurze Lastspitze aufgrund hoher Massenträgheit und im weiteren Verlauf durch das Anheben des Wäschepostens vom niedrigsten Punkt der Trommel gegebenenfalls unter Einwirkung der Wäschemitnehmer innerhalb der Wäschetrommel verursacht wird. Unterschiedlich große Wäscheposten verursachen naturgemäß unterschiedlich große Lastmomente, die von unterschiedlich großen Antriebsmomenten überwunden werden müssen.

Damit ist die unmittelbare Abhängigkeit des Antriebsmomentes von der in der Trommel zu bewegenden Masse der Wäsche gegeben. Mittels geeigneter Rechenverfahren kann ein Mikrocomputer daraus den Wert der Wäschemasse genügend genau bestimmen. Bauliche Aufwendungen sind hierfür nicht weiter erforderlich, da das Antriebsmoment aus den elektrischen Daten der Motorregelung unter Einbeziehung der motoreigenen Konstanten berechnet werden kann.

Das erfindungsgemäße Verfahren kann bei einer Phasenanschnittsteuerung für den Antriebsmotor vorteilhafterweise dadurch weitergebildet werden, daß während der Trommelanlauf-Phase der Phasenanschnittwinkel laufend aufgezeichnet und sein geometrischer Mittelwert gebildet wird, der ein Maß für die mittlere Leistung des Antriebsmotors ist, aus der über die Massenträgheit und das Lastmoment des Wäschepostens seine Masse errechnet wird. Rechnerleistung steht bei üblicher Verwendung von Mikroprozessoren auch für andere Steuerungsaufgaben ohnehin zur Verfügung und muß nur durch geeignete Programmierung installiert werden. Die Mittelwertbildung eignet sich dabei hervorragend als Grundlage zur Berechnung der Masse des Wäschepostens.

In einer weiteren vorteilhaften Ausbildung des erfindungsgemäßen Verfahrens bei einer Waschmaschine, die mit einer Vorrichtung zum Feststellen der Wassermenge im Laugenbehälter ausgestattet ist, zeichnet sich durch eine Information über die im Laugenbehälter befindliche Wassermenge als Korrekturwert in der Berechnung der Masse aus.

Vorteilhafterweise können gemäß einer Weiterbildung des erfindungsgemäßen Verfahrens Werte über mögliche Drehzahlabweichungen vom Sollwert des Drehzahlanstiegs aufgezeichnet und in der Berechnung der Masse berücksichtigt werden. Dies ist von Vorteil besonders dadurch, daß auch in der Anlaufphase in der Trommel umherfallende Wäschestücke gelegentlich auf einen gerade in den Fallweg der Wäschestücke einlaufenden Mitnehmer fallen können und dadurch ein zusätzliches Lastmoment erzeugen.

Wenn gemaß einer Weiterbildung der vorstehend genannten Variante das Profil der Drehzahlabweichungen bewertet wird (periodisch, singulär, flach, abrupt usw.) und je nach Profil einem abgespeicherten Attribut über die Natur des Wäschepostens zugeordnet wird (große, mittlere, kleine, saugfähige, weniger saugfähige Wäscheteile usw.), lassen sich weitere Merkmale des in der Wäsche trommel lagernden wäschepostens erkennen und für den gerade angelaufenen Behandlungsprozeß gestaltend verwerten.

In besonders vorteilhafter Weise kann das erfindungsgemäße Verfahren mittels einer Vorrichtung zum Bestimmen der Höhe der Betriebsspannung des Antriebsmotors diese Größe als Korrekturwert in der Berechnung der Masse berücksichtigen. Hierdurch können Ungenauigkeiten ausgeschaltet werden, die unabhängig von der Natur des Meßverfahrens durch Netzspannungsschwankungen auftreten würden.

In besonders vorteilhafter Weise läßt sich das erfindungsgemäße Verfahren auch bei einem Trommel-Wäschetrockner anwenden und kann gemäß einer Weiterbildung dadurch ausgestaltet sein, daß zu Beginn und im Verlaufe des Trocknungsprozesses mehrmals das Antriebsmoment am Trommelantriebsmotor bestimmt und zur Berechnung der Masse des jeweiligen Wäschepostens benutzt wird und daß die Differenzen jeweils aufeinanderfolgender Berechnungsergebnisse als Maß für die Bestimmung der gerade vorhandenen Restfeuchtigkeit des Wäschepostens sind. Dadurch kann ein Trocknungsprozeß in Abhängigkeit von dem erreichten Restfeuchtewert in irgendeiner Weise gesteuert und schließlich bei Erreichen des gewünschten Ziels abgebrochen werden.

Zur weiteren Steigerung der Genauigkeit der Bestimmung der Wäschemasse kann während einer sich an die Trommelanlauf-Phase anschließenden Drehzahl-Haltephase der mittlere Phasenanschnittwinkel der Drehzahl-Regelungseinrichtung des Trommelantriebsmotors ermittelt werden und als Maß für bei der Massenbestimmung mittels des Phasenanschnittwinkels der Anlaufphase zu berücksichtigende maschinenbedingte Bremsmomente dienen. Solche Bremsmomente können durch Wäschereibung, durch Walkarbeit des Trommelantriebs-Riemens, durch Lagerreibung und andere maschinenbedingte Ursachen erzeugt werden.

Anhand der in der Zeichnung dargestellten Diagramme und Trommel-Bewegungsphasen ist das erfindungsgemäße Verfahren und weitere Merkmale nachstehend erläutert. Es zeigen
- Fig. 1: ein Drehzahl-Diagramm über der Zeit für die Dauer der Trommel-Anlaufphase und einer anschließenden Drehzahl-Haltephase,
- Fig. 2: ein Diagramm von Lastmomenten über der ansteigenden Drehzahl bzw. über der Zeit für die Dauer der Anlaufphase und
- Fig. 3 bis 5: drei unterschiedliche Trommel-Positionen während der Anlaufphase.

Das erfindungsgemäße Verfahren wird zwischen den Zeitpunkten t0 und t1 im Verlaufe einer Trommel-Anlaufphase A angewendet, während der die Drehzahl der Wäschetrommel vom Stillstand aus bis zur Behandlungsdrehzahl n1 gesteigert wird. Diese Behandlungsdrehzahl liegt bei einer TrommelWaschmaschine üblicher Bauart bei etwa 55 1/min und wird regelmäßig für die Wäschebewegung während des Waschprozesses benutzt. In einer anschließenden Drehzahl-Haltephase B können Korrekturwerte ermittelt werden, die sich aus maschinenbedingten Bremsmomenten an der Trommel ergeben. Diese Drehzahl-Haltephase ist begrenzt durch die Zeitmarken t1 und t2.

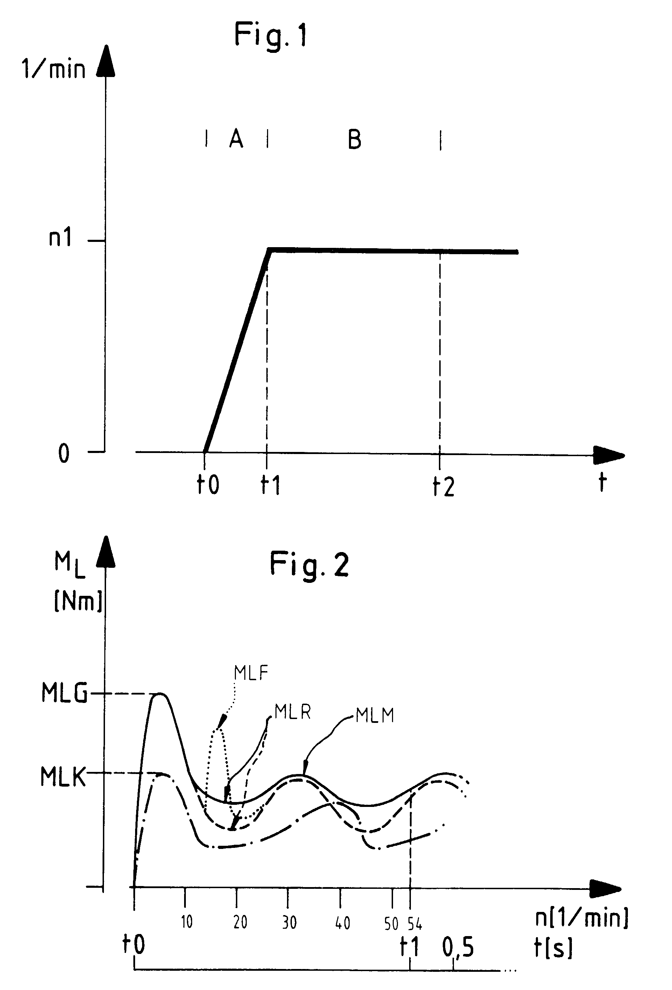

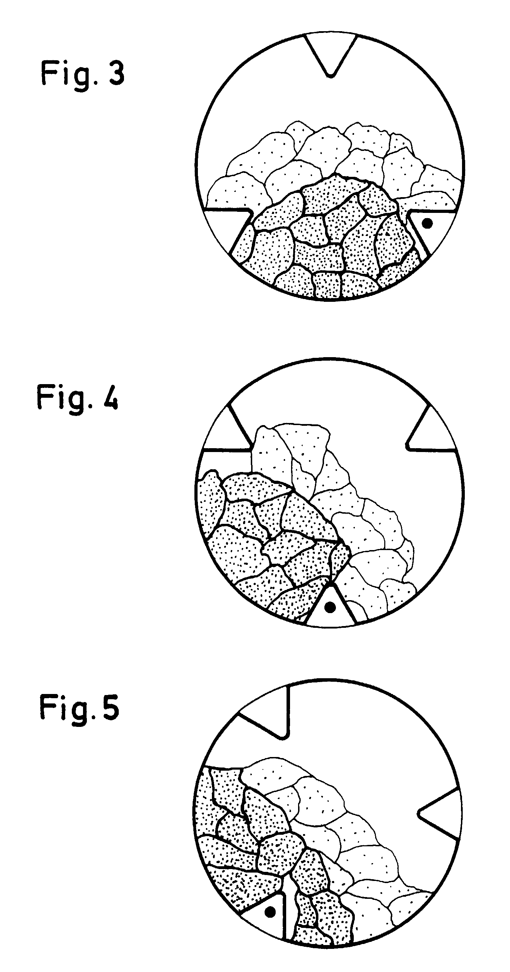

Das Diagramm in Fig. 2 zeigt verschiedene Verläufe der Lastmomente M_{L} der wäschebeladenen Trommel im Verlaufe der Steigerung der Drehzahl der Trommel von 0 bis auf beispielsweise 54 1/min während der Trommel-Anlaufphase A. Im Zusammenhang mit den in Fig. 3 bis 5 dargestellten Trommel-positionen während der Anlaufphase A werden die Lastmoment-Verläufe erläutert. In Fig. 3 bis 5 sind zwei verschieden große Wäscheposten dargestellt. Ein kleiner Wäscheposten besteht aus Wäscheteilen, die mit einem engen Punktraster dargestellt sind. Der große Wäscheposten besteht aus der Summe der Wäscheteile mit engem Punktraster und den darüber liegenden Wäscheteilen mit weitem Punktraster.

Zunächst wird der Verlauf des Lastmomentes über die ansteigenden Drehzahlwerte anhand des kleineren Wäschepostens erläutert. Fig. 3 zeigt die Trommelposition, mit einem kleinen Wäscheposten aus kleinen Teilen bei stillstehender Wäschetrommel. Der Verlauf des Lastmoments M_{L} dieses kleinen Wäschepostens wird durch die strichpunktierte Diagramm-Linie dargestellt. In Fig. 4 ist die Trommel - zu erkennen an dem mit Punkt versehenen Mitnehmer - um 60° weitergedreht und in Fig. 5 um weitere 30°.

Die Bewegungsphase zwischen den Positionen Fig. 3 und Fig. 4 enthält zunächst eine hohe Lastmoment-Spitze MLK kurz nach dem Einschalten des Antriebsmotors. Sie kennzeichnet das hohe, vom Antrieb zunächst zu überwindende Trägheitsmoment der Trommel mit der Wäsche. Danach fällt das Lastmoment rapide wieder ab bis auf einen Wert, der durch die ständige Beschleunigung der Trommel gegeben ist. Inzwischen bewegt sich aber der gepunktete Mitnehmer weiter und hebt den enggerasterten Wäscheposten allmählich in die Höhe. Dies drückt sich durch langsames Ansteigen des Lastmomentes gemäß der strichpunktierten Diagrammlinie in Fig. 2 ab etwa 15 1/min aus.

Bei etwa 40 1/min hat der gepunktete Mitnehmer eine Position etwa wie in Fig. 5 erreicht, bei der etliche oberhalb des Mitnehmers liegende Wäschestücke das Übergewicht verlieren und über den Mitnehmer hinweg zur tiefsten Position in der Trommel zurückfallen. Dies drückt sich durch den runden oberen Kurvenverlauf der strichpunktierten Diagrammlinie in Fig. 2 bei etwa 40 1/min aus. Beim Weiterdrehen des Mitnehmers fallen schließlich alle Wäschestücke herab und haben nahezu wieder die Position innerhalb der Trommel wie in Fig. 3. Dadurch fällt das Lastmoment wieder nahezu auf den Minimalwert zurück. Inzwischen ist die Nenndrehzahl von beispielsweise 54 1/min nahezu erreicht. Damit ist die Trommel-Anlaufphase A (am Zeitpunkt t1) beendet. Bei einem starken Antriebsmotor sind nun knapp 0,5 s vergangen.

Ein größerer Wäscheposten verursacht auch größere Lastmomente. Die in Fig. 3 bis 5 dargestellten, weitläufig punktierten Wäschestücke ergänzen den kleinen Wäscheposten mit enggerasterten Wäschestücken zu einem insgesamt großen wäscheposten. Entsprechend größer ist auch das Trägheitsmoment beim Einschalten des Antriebsmotors, so daß die ausgezogene Diagrammlinie in Fig. 2 zunächst bis zu dem Wert MLG ausschlägt, ehe die Trommel mit ihrem schweren Wäscheposten nennenswert in Drehung versetzt wird. Dann jedoch fällt das Drehmoment bis auf den Wert MLR herab; die Position des gepunkteten Mitnehmers liegt dabei wiederum zwischen den in Fig. 3 und 4 dargestellten Positionen. Von da an hebt der gepunktete Mitnehmer den Wäscheposten an und vergrößert damit das Lastmoment der Trommel. Folglich steigt auch die ausgezogene Diagrammlinie wieder an bis zum Wert MLM, der erreicht ist, ehe eine nennenswerte Menge von Wäscheteilen über den Kamm des Mitnehmers hinweg wieder zum Boden der Trommel herabfallen.

Ein kleiner Wäscheposten ist aus einer allgemein kompakteren Wäschemenge gebildet, die vom nachlaufenden Mitnehmer sehr lange kompakt gehalten und weit hochgehoben wird, ehe sich einzelne Wäscheteile ablösen und herabfallen. Dies ist der Grund dafür, daß das Maximum des Lastmomentes im Vergleich zum Minimum größer ist als beim großen Wäscheposten und auch später erreicht wird. Da bei einem großen Wäscheposten sich bereits Wäscheteile ablösen, wenn ein gleich positionierter kleinerer Wäscheposten noch kompakt zusammengehalten wird, wird die anzuhebende Gesamtmasse kleiner. Daher verläuft die Lastmomentkurve eines großen Wäschepostens flacher. Außerdem vermindern die bereits eingeleiteten Auflösungen des Wäschepostens die anzuhebende Gesamtmasse so sehr, daß das Lastmoment ML in Trommelpositionen, in denen das Lastmoment eines kleineren Wäschepostens noch ansteigt, bereits wieder zu sinken beginnt. Daher erreicht das Lastmoment eines großen Wäschepostens aus kleinen Wäscheteilen sein Maximum MLM eher als das des kleinen Wäschepostens.

Die Differenz zwischen dem Minimum MLR und dem Maximum MLM ist entsprechend der gestrichelten Diagrammlinie in Fig. 2 bei einem großen Wäscheposten mit kleinen Teilen etwa gleich groß wie bei dem kleinen Wäschposten mit kleinen Teilen, wenn die kleinen Teile des großen Wäschepostens proportional zur Größe des Wäschepostens sind wie beim kleinen Wäscheposten. Hat der große Wäscheposten jedoch ausschließlich große Teile, dann wird die Differenz zwischen dem Lastmoment-Minimum MLR und dem Lastmoment-Maximum MLM entsprechend der ausgezogenen Diagrammlinie in Fig. 3 geringer.

Außerdem können kleine, sich vorzeitig aus dem Ballen des Wäschepostens ablösende Wäsche teile entsprechend der punktierten Diagrammlinie in Fig. 2 zusätzlich kleine Lastmoment-Ausschläge MLF verursachen, wenn sie nach den Ablösen auf einen nachfolgenden Mitnehmer fallen. Beim einfachen Abrollen über den Wäscheballen bis auf den Boden (Mantel) des Laugenbehälters verursachen solche Wäschestücke kaum Rückwirkungen; beim Auftreffen auf einen Mitnehmer verursacht die Aufzehrung ihrer kinetischen Energie jedoch ein zusätzliches Lastmoment.

Der Verlauf der sich innerhalb der Zeit- bzw. Drehzahl-Inkremente nacheinander einstellenden Lastmomente kann für die Dauer der Anlaufphase aufgezeichnet und analysiert werden. Aus dem Vergleich mit jeweils abgespeicherten Referenzwerten ist dann einigermaßen sicher die Größe des Wäschepostens und dessen Zusammensetzung zu erkennen. Werden zusätzlich derartige Trommel-Anlaufphasen zu unterschiedlichen Zeitpunkten beim Beginn des Waschprozesses durchgeführt, dann kann auch noch die Saugfähigkeit des Wäschepostens ermittelt und damit die Wäscheart bestimmt werden. Dazu ist es erforderlich, daß eine erfindungsgemäße Trommel-Anlaufphase bereits vor dem Benetzen der Wäsche mit Frischwasser stattfindet. Beim Vergleich mit einer späteren Trommel-Anlaufphase mit benetzter Wäsche läßt sich unmittelbar die Menge des im Wäscheposten festgehaltenen Wassers bestimmen.

Bei Anwendung des erfindungsgemäßen Bestimmungsverfahrens in einem Wäschetrockner kann zunächst das Wäschenaßgewicht des Wäschepostens bestimmt und während des fortlaufenden Trockenprozesses immer wieder eine solche Wäschemengenbestimmung vorgenommen werden, um die Abnahme des Restfeuchtewertes in der Wäsche zu verfolgen. In Abhängigkeit vom Verlauf der Massenabnahme können bestimmte Porzeßparameter gesteuert werden und schließlich bei Erreichen eines Zielwertes für die Restfeuchte der Trockenprozeß beendet werden.

Die Anwendung des erfindungsgemäßen Verfahrens zur Beladungserkennung erfordert keine zusätzlichen Bauteile, wenn die Trommelantriebe mit einem Universalmotor ausgestattet sind. Eine Aussage über das Saugvermögen des Wäschepostens ist in einer Waschmaschine auch dadurch möglich, daß von einer bisher üblichen Methode der Beladungserkennung Gebrauch gemacht wird, nämlich durch Beobachtung der Wasserzulaufmenge auf die Masse des Wäschepostens zu schließen. Die erfindungsgemäße Beladungserkennung ist nahezu unabhängig von Toleranzen der Maschinen-Komponenten wie Wasserstandgeber, Mengenregler, Netzleitungs-Druck usw.. Die erfindungsgemäße Beladungserkennung kann zu jedem Zeitpunkt des Behandlungsprozesses wiederholt werden. Dies ist auch dann möglich, wenn die Waschmaschine oder der Wäschetrockner im Verlaufe des Programmablaufes abgeschaltet worden ist, und sogar auch dann, wenn der Wäscheposten zwischenzeitlich verändert worden ist, z.B. durch Nachladen oder vorzeitiges Entnehmen einzelner Teile.

## Patentansprüche

1. Verfahren zum Bestimmen der Wäschemenge in einer wenigstens annähernd horizontal gelagerten und durch einen Universalmotor mit Wasch- bzw. Trockendrehzahl antreibbaren Wäschetrommel anhand von Beobachtungen von Parametern des Betriebs in einer Wäschebehandlungsmaschine, dadurch gekennzeichnet, daß während der Trommelanlauf-Phase (A) zum Betrieb der Trommel mit einer geregelten Behandlungsdrehzahl (nl), bei der die Wäsche nicht durch Zentrifugalkraft am Trommelmantel gehalten wird, das Antriebsmoment am Trommelantriebsmotor bestimmt wird.

2. Verfahren nach Anspruch 1 mit einer Phasenanschnittsteuerung für den Antriebsmotor, dadurch gekennzeichnet, daß während der Trommel-Anlaufphase (A) der Phasenanschnittwinkel laufend aufgezeichnet und sein geometrischer Mittelwert gebildet wird, der ein Maß für die mittlere Leistung des Antriebsmotors ist, aus der über die Massenträgheit und das Lastmoment des Wäschepostens seine Masse errechnet wird.

3. Verfahren nach Anspruch 1 oder 2 bei einer Waschmaschine mit einer Vorrichtung zum Feststellen der Wassermenge im Laugenbehälter, dadurch gekennzeichnet, daß eine Information über die im Laugenbehälter befindliche Wassermenge als Korrekturwert in der Berechnung der Masse berücksichtigt wird.

4. Verfahren nach einem der vorstehenden Ansprüche, dadurch gekennzeichnet, daß Werte über mögliche Drehzahlabweichungen vom Sollwert des Drehzahlanstiegs aufgezeichnet und in der Berechnung der Masse berücksichtigt werden.

5. Verfahren nach Anspruch 4, dadurch gekennzeichnet, daß das Profil der Drehzahlabweichungen bewertet wird (periodisch, singulär, flach, abrupt usw) und je nach Profil einem abgespeicherten Attribut über die Natur des Wäschepostens zugeordnet wird (große, mittlere, kleinere, saugfähige, weniger saugfähige Wäscheteile usw.).

6. Verfahren nach einem der vorstehenden Ansprüche, dadurch gekennzeichnet, daß eine Vorrichtung zum Bestimmen der Höhe der Betriebsspannung des Antriebsmotors vorgesehen ist und daß die Höhe der Betriebsspannung als Korrekturwert in der Berechnung der Masse berücksichtigt wird.

7. Verfahren nach einem der Ansprüche 1, 2 und 4 bis 6 bei einem Trommel-Wäschetrockner, dadurch gekennzeichnet, daß zu Beginn und im Verlaufe des Trocknungsprozesses mehrmals das Antriebsmoment am Trommelantriebsmotor bestimmt und zur Berechnung der Masse des jeweiligen Wäschepostens benutzt wird und daß die Differenzen jeweils aufeinanderfolgender Berechnungsergebnisse als Maß für die Bestimmung der gerade vorhandenen Restfeuchtigkeit des Wäschepostens dienen.

8. Verfahren nach Anspruch 7, dadurch gekennzeichnet, daß der bestimmte Restfeuchtigkeitswert ein Kriterium für die Beendigung des Trocknungsprozesses ist.

9. Verfahren nach einem der vorstehenden Ansprüche, dadurch gekennzeichnet, daß während einer sich an die Trommel-Anlaufphase (A) anschließenden Drehzahl-Haltephase (B) der mittlere Phasenanschnittwinkel der Drehzahl-Regelungseinrichtung des Trommelantriebsmotors er. mittelt wird und als Maß für bei der Massenbestimmung mittels des Phasenanschnittwinkels der Anlaufphase (A) zu berücksichtigende maschinenbedingte Bremsmomente dient.

## Claims

1. Method of determining the laundry quantity in an at least approximately horizontally mounted laundry drum, which is drivable by a universal motor at washing or drying rotational speed, on the basis of observations of parameters of the operation in a laundry treatment machine, characterised in that during the drum start-up phase (A) the drive torque of the drum drive motor is determined for the operation of the drum at a regulated handling rotational speed (n1) at which the laundry is not held against the drum circumference by centrifugal force.

2. Method according to claim 1 with a phase lead control for the drive motor, characterised in that during the drum start-up phase (A) the phase lead angle is continuously recorded and its geometric mean value is formed, which is a measure for the mean power of the drive motor, from which by way of the mass moment of inertia and the load moment of the laundry batch its mass is calculated.

3. Method according to claim 1 or 2 in a washing machine with a device for ascertaining the water quantity in the washing solution container, characterised in that an item of information about the water quantity disposed in the washing solution container is taken into consideration as a correction value in the calculation of the mass.

4. Method according to one of the preceding claims, characterised in that values about possible deviations of rotational speed from the target value of the rotational speed increase are recorded and taken into consideration in the calculation of the mass.

5. Method according to claim 4, characterised in that the profile of the rotational speed deviations is evaluated (periodic, singular, flat, abrupt, etc.) and in accordance with the respective profile a stored attribute about the nature of the laundry batch is assigned (large, medium, small, absorbent, less-absorbent laundry components, etc.).

6. Method according to one of the preceding claims, characterised in that a device for determining the level of the operating voltage is provided and that the level of the operating voltage is taken into consideration as a correction value in the calculation of the mass.

7. Method according to one of claims 1, 2 and 4 to 6 in a drum laundry drier, characterised in that at the start and in the course of the drying process the drive torque of the drum drive motor is determined a plurality of times and used for the calculation of the mass of the respective laundry batch and that the differences each time of successive calculation results serve as a measure for the determination of the instantaneous residual moisture content of the laundry batch.

8. Method according to claim 7, characterised in that the determined residual moisture content is a criterion for the conclusion of the drying process.

9. Method according to one of the preceding claims, characterised in that during a rotational speed holding phase (B) adjoining the drum start-up phase (A) the mean phase lead angle of the rotational speed regulating equipment of the drum drive motor is determined and serves as a measure for retarding moments, which are caused by the machine, to be taken into consideration in the mass determination by means of the phase lead angle of the start-up phase (A).

## Revendications

1. Procédé pour déterminer la quantité de linge contenue dans un tambour à linge tourillonné sur axe au moins approximativement horizontal et pouvant être entraîné par un moteur universel à un nombre de tours de lavage ou à un nombre de tours de séchage, en fonction d'observations de paramètres du fonctionnement dans une machine de traitement du linge, caractérisé en ce que le couple d'entraînement est mesuré sur le moteur d'entraînement du tambour pendant la phase (A) de mise en marche du tambour pour le fonctionnement du tambour à un nombre de tours de traitement réglé (n1) auquel le linge n'est pas maintenu contre la paroi du tambour par la force centrifuge.

2. Procédé selon la revendication 1, comprenant une commande de l'angle de fonctionnement pour le tambour d'entraînement, caractérisé en ce que, pendant la phase (A) de mise en marche du tambour, l'angle de fonctionnement est enregistré en continu et on forme sa moyenne géométrique, qui est une mesure de la puissance moyenne du moteur d'entraînement, sur la base de laquelle la masse du lot de linge est calculée en faisant intervenir dans le calcul son inertie de masse et son couple résistant.

3. Procédé selon la revendication 1 ou 2, dans une machine à laver comprenant un dispositif de mesure de la quantité d'eau contenue dans la cuve à lessive, caractérisé en ce qu'une information sur la quantité d'eau contenue dans la cuve à lessive est prise en compte dans le calcul de la masse en tant que quantité correctrice.

4. Procédé selon une des revendications précédentes, caractérisé en ce que des quantités relatives à d'éventuels écarts du nombre de tours par rapport à la valeur de consigne de la croissance du nombre de tours sont enregistrées et prises en compte dans le calcul de la masse.

5. Procédé selon la revendication 4, caractérisé en ce que le profil des écarts du nombre de tours est analysé (périodiques, singuliers, plats, brusques, etc.) et associé, en fonction du profil, à un attribut mémorisé concernant la nature du lot de linge (pièces de linge de grande, moyenne ou petite taille, absorbantes, moins absorbantes, etc.).

6. Procédé selon une des revendications précédentes, caractérisé en ce qu'il est prévu un dispositif de mesure de la valeur de la tension de fonctionnement du moteur d'entraînement et en ce que la valeur de la tension de fonctionnement est prise en compte dans le calcul de la masse en tant que quantité correctrice.

7. Procédé selon une des revendications 1, 2 et 4 à 6 appliqué dans un sèche-linge à tambour, caractérisé en ce qu'au début et dans le cours de l'opération de séchage, le couple d'entraînement est mesuré sur le moteur d'entraînement du tambour à plusieurs reprises et utilisé pour le calcul de la masse du lot de linge à traiter, et en ce que les différences entre les résultats de calcul successifs sont utilisées comme mesure pour la détermination de l'humidité résiduelle encore subsistante du lot de linge.

8. Procédé selon la revendication 7, caractérisé en ce que la valeur d'humidité résiduelle déterminée est un critère pour l'arrêt de l'opération de séchage.

9. Procédé selon une des revendications précédentes, caractérisé en ce que, pendant une phase (B) de maintien du nombre de tours qui fait suite à la phase (A) de mise en marche du tambour, l'angle de fonctionnement moyen du dispositif de régulation du nombre de tours du moteur d'entraînement du tambour est capté et utilisé comme mesure pour la détermination de la masse au moyen de l'angle de fonctionnement de la phase de mise en marche (A) pour les couples de freinage dus à la machine qui doivent être pris en compte.
